# EUROPEAN PATENT APPLICATION

(11) **EP 4 699 669 A1**
(43) Date of publication of application: **25.02.2026**
(21) Application number: 25178401.3
(22) Date of filing: 23.05.2025
(51) Int. Cl.: A62C 3/16, H01M 10/6556, H01M 50/204

(54) **HOUSING FRAME, BATTERY STRUCTURE AND ENERGY STORAGE DEVICE INCLUDING SAME**

(30) Priority: 20.08.2024 KR 20240110954
(71) Applicant: SAMSUNG SDI CO., LTD., Yongin-si, Gyeonggi-do 17084 (KR)
(72) Inventor: YOON, Jong-Wook, 17084 Yongin-Si, Gyeonggi-do (KR)
(74) Representative: Gulde & Partner

(57) **Abstract**

A battery structure (100) includes a first battery cell (110), a first support plate (120) having a first cooling channel (121) for cooling the first battery cell (110) and supporting the first battery cell (110), a second battery cell (210) spaced downward from the first support plate (120), and a second support plate (220) having a second cooling channel (221) for cooling the second battery cell (210) and supporting the second battery cell (210). A fire extinguishing nozzle (130) is formed in the first cooling channel (121), and the fire extinguishing nozzle (130)is configured to supply a fire extinguishing agent toward the second battery cell (210).

## Description

### FIELD

Aspects of embodiments of the present disclosure relate to a module housing, a battery structure, and an energy storage device including the same.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly. Heat may be generated during the discharge or charging of secondary batteries. In a case where heat generation is continued, thermal runaway of the secondary batteries may occur, which may cause a fire in the devices or systems on which the secondary batteries are mounted.

Accordingly, a cooling structure of a secondary battery is formed as a cooling channel structure at the lower portions of battery cells, and a separate fire extinguishing spray structure is formed in case of a battery cell fire to address an overheating problem. However, providing the battery cooling structure and the fire suppression structure is complicated and the cost increases.

The above information disclosed in this Background section is for enhancement of understanding of the background of the present disclosure, and therefore, it may contain information that does not constitute related (or prior) art.

### SUMMARY

Aspects of embodiments of the present disclosure provide a module housing, a battery structure, and an energy storage device including the same.

According to an aspect of the disclosure, a battery structure includes a first battery cell, a first support plate having a first cooling channel for cooling the first battery cell and supporting the first battery cell, a second battery cell spaced downward from the first support plate, and optionally a second support plate having a second cooling channel for cooling the second battery cell and supporting the second battery cell. A fire extinguishing nozzle is formed in the first cooling channel, and the fire extinguishing nozzle may supply a fire extinguishing agent toward the second battery cell. Hence, by forming the fire extinguishing nozzle in the first cooling channel, the need for separately mounting a fire suppression structure is avoided, which reduces complexity and cost.

The following embodiments may be combined as desired.

In some embodiments, the fire extinguishing nozzle may be formed at a position corresponding to the second battery cell along the first cooling channel. An advantage of this embodiment may be that the fire extinguishing agent can be sprayed directly onto the second battery cell.

In some embodiments, a vent portion may be formed on an upper surface of the second battery cell. The fire extinguishing nozzle may spray the fire extinguishing agent toward the vent portion. An advantage of this embodiment may be that the fire extinguishing agent can be sprayed directly onto the vent portion, which would open when the second battery cell would malfunction due to internal pressure, allowing for the fire extinguishing agent to enter the second battery cell.

In some embodiments, the battery structure may further include a heat-sensitive member. The heat-sensitive member may be formed on one surface of the fire extinguishing nozzle. The one surface may face in a spray direction in which the fire extinguishing nozzle sprays the fire extinguishing agent. The heat-sensitive member may be adapted to melt at a temperature higher than a predetermined melting point of the heat-sensitive member. The heat-sensitive member may seal the fire extinguishing nozzle, in particular in a solid or non-molten state of the heat-sensitive member. An advantage of this embodiment may be that the fire extinguishing nozzle opens automatically in case the temperature at the nozzle increases above the melting point. For example, the melting point may be chosen well above operation temperatures of any of the first and second battery cells, but well below a temperature that would be reached when the second battery cell heats up and maybe catches fire caused by malfunctions.

In some embodiments, the fire extinguishing nozzle may include a protrusion. The protrusion may protrude toward the second battery cell. The heat-sensitive member may seal an opened end of the protrusion. An advantage of this embodiment may be that a spaying direction of the fire extinguishing nozzle can be chosen by the protrusion.

In some embodiments, in case the heat-sensitive member melts, the fire extinguishing nozzle may be opened and spray the fire extinguishing agent toward the second battery cell through the fire extinguishing nozzle. An advantage of this embodiment may be that the fire extinguishing agent is released automatically when necessary.

In some embodiments, the battery structure may comprise a second support plate comprising a second cooling channel being configured for cooling the second battery cell and for supporting the second battery cell. An advantage of this embodiment may be that the second battery cell can be cooled targeted and independent of the cooling of the first battery cell.

In some embodiments, the battery structure may further include a chiller. The chiller may be connected to the first cooling channel and the second cooling channel to supply a refrigerant including the fire extinguishing agent. The refrigerant may have fire extinguishing capabilities or may be the fire extinguishing agent. An advantage of this embodiment may be that only one circuit is required to transport the refrigerant and the agent, wherein transportation of the of the refrigerant and the agent through the circuit is performed by the chiller, which may further reduce complexity and cost. In some embodiments, the chiller may control a spray amount or a spray pressure of the fire extinguishing agent. An advantage of this embodiment may be that the amount of the applied fire extinguishing agent can be adapted as required without the need of a separate device.

In some embodiments, the first cooling channel and the second cooling channel may be connected to each other. A lower portion of the first battery cell and a lower portion of the second battery cell may be cooled by the refrigerant. An advantage of this embodiment may be that the cooling cannels can be formed in a simple manner.

According to another aspect of the disclosure, a module housing, e.g. a housing of a battery module, may include a pair of end plates. The pair of end plates may be disposed outside a plurality of battery cells, e.g. the first and second battery plates. The pair of end plates may be aligned in one direction. The module housing may comprise a pair of side plates. The pair of side plates may connect the pair of end plates and supporting opposite side surfaces of the plurality of battery cells. The module housing may comprise a support plate joined to the pair of end plates in proximity to bottom surfaces of the plurality of battery cells. The support plate may comprise a cooling channel through which a fire extinguishing agent flows. A fire extinguishing nozzle is formed in the cooling channel. The support plate may be the first support plate. Hence, by forming the fire extinguishing nozzle in the first cooling channel, the need for separately mounting a fire suppression structure is avoided, which reduces complexity and cost.

The following embodiments of the module housing may be combined as desired.

In some embodiments, in the event of a fire in one of the plurality of battery cells, e.g. in the second battery cell, disposed below another one of the plurality of battery cells, e.g. the first battery cell, a fire extinguishing agent may be sprayed to a vent portion of the second battery cell through the fire extinguishing nozzle. An advantage of this embodiment may be that the fire extinguishing agent can be sprayed directly onto the vent portion, which would open when the second battery cell would malfunction due to internal pressure, allowing for the fire extinguishing agent to enter the second battery cell.

In some embodiments, the module housing may further include a heat-sensitive member. The heat-sensitive member may be formed on one surface of the fire extinguishing nozzle in a spray direction of the fire extinguishing nozzle. The heat-sensitive member may melt at a temperature higher than a predefined melting point. An advantage of this embodiment may be that the fire extinguishing nozzle opens automatically in case the temperature at the nozzle increases above the melting point. For example, the melting point of the heat-sensitive member may be chosen well above operation temperatures of any of the first and second battery cells, but well below a temperature that would be reached when the second battery cell heats up and maybe catches fire caused by malfunctions.

In some embodiments, when the heat-sensitive member may melts, the fire extinguishing nozzle may be opened, and the fire extinguishing agent may be sprayed through the fire extinguishing nozzle. An advantage of this embodiment may be that the fire extinguishing agent is released automatically when necessary.

According to yet another aspect of the disclosure, an energy storage device includes a battery structure, and a battery rack in which the battery structure is accommodated. The battery structure may include a first battery cell, a first support plate having a first cooling channel for cooling the first battery cell and supporting the first battery cell, a second battery cell spaced downward from the first support plate, and optionally a second support plate having a second cooling channel for cooling the second battery cell and supporting the second battery cell. A fire extinguishing nozzle may be formed in the first cooling channel, and the fire extinguishing nozzle may supply a fire extinguishing agent toward the second battery cell. Hence, by forming the fire extinguishing nozzle in the first cooling channel, the need for separately mounting a fire suppression structure is avoided, which reduces complexity and cost.

The following embodiments of the energy storage device may be combined as desired.

In some embodiments, the energy storage device may further include a chiller. The chiller may be connected to the first cooling channel and the second cooling channel to supply a refrigerant including a fire extinguishing agent. The refrigerant may have fire extinguishing capabilities or may be the fire extinguishing agent. An advantage of this embodiment may be that only one circuit is required to transport the refrigerant and the agent, wherein transportation of the of the refrigerant and the agent through the circuit is performed by the chiller, which may further reduce complexity and cost.

In some embodiments, the chiller may control a spray amount or a spray pressure of the fire extinguishing agent. An advantage of this embodiment may be that the amount of the applied fire extinguishing agent can be adapted as required without the need of a separate device.

In some embodiments, the fire extinguishing nozzle of the battery structure may be formed at a position corresponding to the second battery cell along the first cooling channel in a state of being stacked on the battery rack. An advantage of this embodiment may be that fire extinguishing capabilities require less space, allowing for a higher specific energy density per volume of the energy storage device.

In some embodiments, a vent portion may be formed on an upper surface of the second battery cell. The fire extinguishing nozzle may be directed to spray the fire extinguishing agent toward the vent portion. An advantage of this embodiment may be that An advantage of this embodiment may be that the fire extinguishing agent can be sprayed directly onto the vent portion, which would open when the second battery cell would malfunction due to internal pressure, allowing for the fire extinguishing agent to enter the second battery cell.

In some embodiments, the energy storage device may further include a heat-sensitive member. The heat-sensitive member may be formed on one surface of the fire extinguishing nozzle in a spray direction of the fire extinguishing nozzle. The heat-sensitive member may melt at a temperature higher than a predefined melting point. The heat-sensitive member may seal the fire extinguishing nozzle. An advantage of this embodiment may be that An advantage of this embodiment may be that the fire extinguishing nozzle opens automatically in case the temperature at the nozzle increases above the melting point. For example, the melting point may be chosen well above operation temperatures of any of the first and second battery cells, but well below a temperature that would be reached when the second battery cell heats up and maybe catches fire caused by malfunctions.

In some embodiments, when the heat-sensitive member melts, the fire extinguishing nozzle may be opened. The opened fire extinguishing nozzle may be adapted to spray fire extinguishing agent toward the second battery cell through the fire extinguishing nozzle. An advantage of this embodiment may be that the fire extinguishing agent is released and sprayed automatically when it is required, e.g. by a malfunction generating excess heat by the second battery.

According to some embodiments, individual fire suppression for each battery cell may be achieved through the fire extinguishing nozzles. An advantage of this embodiment may be that using an unnecessary amount of fire extinguishing agent is avoided.

According to some embodiments, it is possible to accurately and quickly respond to the battery cell where a fire occurres. In addition, by directly supplying the fire extinguishing agent to the battery cell where a fire occurred, it is possible to prevent the fire from spreading to surrounding battery cells or surrounding battery modules.

According to some embodiments, the spray amount and spray pressure of the fire extinguishing agent may be controlled through the chiller. Accordingly, the fire extinguishing effect may be improved in case of fire.

According to some embodiments, based on one cooling channel, the fire extinguishing function may be performed on the battery module positioned below the cooling channel, and the cooling function may be performed on the battery module positioned above the cooling channel. Accordingly, the structure of the energy storage device may be simplified and the cost thereof may be reduced.

According to some embodiments, the fire extinguishing agent may be sprayed directly from above to below through the fire extinguishing nozzles to intensively spray the fire extinguishing agent on the battery cell where the fire occurred.

According to some embodiments, continuous spraying of the fire extinguishing agent through the chiller may be performed to minimize the spread of fire in the battery cells.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view of an exemplary battery structure according to some embodiments.
FIG. 2 is a bottom view of a first support plate of the battery structure shown in FIG. 1.
FIG. 3 is a cross-sectional side view of a first cooling channel in a region C, indicated within a partial enlarged view of a region B of FIG. 2, showing fire extinguishing nozzles according to some embodiments.
FIG. 4 is a cross-sectional side view of a first cooling channel in a region C, indicated within a partial enlarged view of a region B of FIG. 2, showing fire extinguishing nozzles according to some embodiments.
FIG. 5 is a side view of a battery structure according to some embodiments.
FIG. 6 is a side view of a battery structure including a chiller according to some embodiments.
FIG. 7 is an example of an energy storage device according to some embodiments in a side view.
FIG. 8 is a further enlarged view of an enlarged region D in FIG. 7.
FIG. 9 is a perspective view of an exemplary module housing according to some embodiments.

### DETAILED DESCRIPTION

Hereinafter, embodiments of the present disclosure will be described, in detail, with reference to the accompanying schematic drawings.

The embodiments described in this specification and the configurations shown in the drawings are only some of the embodiments of the present disclosure and do not represent all of the technical aspects and features of the present disclosure. Accordingly, it should be understood that there may be various modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly. The term "below" may mean that two element, e.g. battery cells, are arranged after each other in the direction of gravity.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components". Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

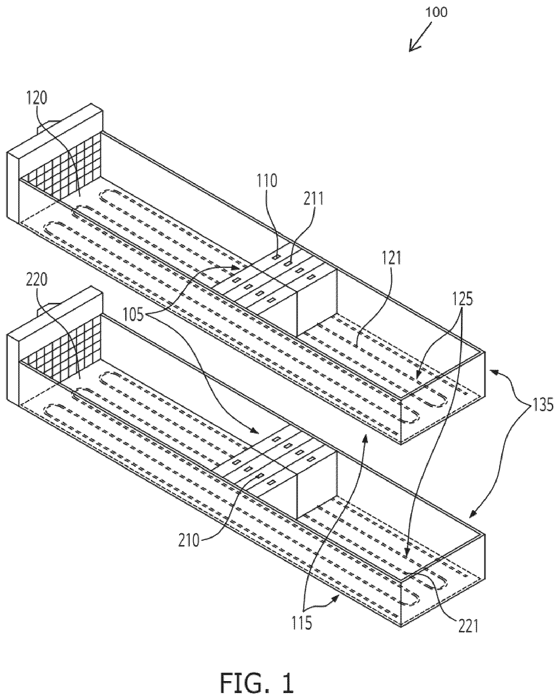

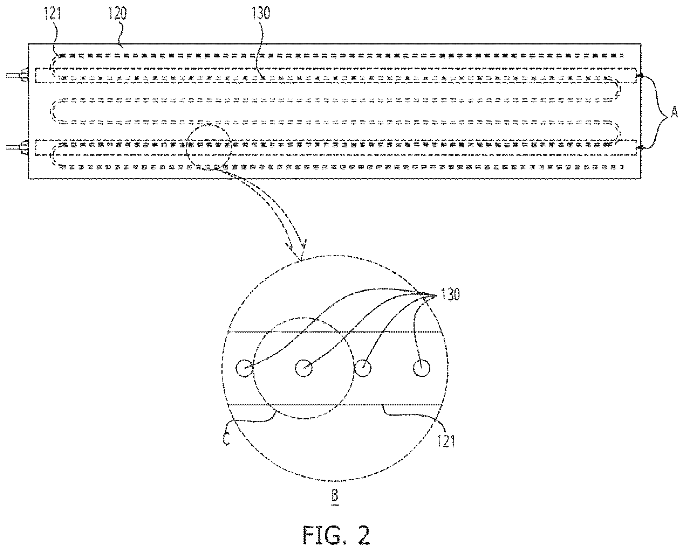

FIG. 1 is a perspective view of an exemplary battery structure 100 according to some embodiments, and FIG. 2 illustrates a bottom view of a first support plate 120 of the battery structure 100. Generally, as shown in FIG. 1, the battery structure 100 includes battery modules 135. Each of the battery modules 135 include battery cells 105 (including first battery cell 110 and second battery cell 210) arranged on a support plate 115 (including first support plate 120 and second support plate 220). According to some embodiments detailed herein, one or more of the support plates 115 include a cooling channel (including first cooling channel 121 and second cooling channel 221). One or more battery cells 105 may include a vent portion 211, as shown in FIG. 1. Detailed discussion of the first battery cell 110 and the second battery cell 210 and fire suppression in the second battery cell 210 should be understood to be for explanatory purposes rather than limited to any particular battery cell 105.

Referring to FIGS. 1 and 2, the battery structure 100 includes the first battery cell 110, the first support plate 120 supporting the first battery cell 110, the second battery cell 210, and the second support plate 220 supporting the second battery cell 210. Fire extinguishing nozzles 130 may be formed in the first cooling channel 121, and the fire extinguishing nozzles 130 may supply a fire extinguishing agent toward the second battery cell 210.

The first cooling channel 121 for cooling the first battery cell 110 may be formed in the first support plate 120. The first support plate 120 may support the first battery cell 110. The second battery cell 210 may be spaced downward from the first support plate 120, as shown in the exemplary arrangement of FIG. 1.

The second support plate 220 may have the second cooling channel 221 formed therein for cooling the second battery cell 210 and may support the second battery cell 210.

The cooling channels 121 and 221 may be formed inside the support plates 120 and 220. The cooling channels 121 and 221 may correspond to a pipe through which liquid flows and may correspond to a pipe passing through the support plates 120 and 220. The cooling channels 121 and 221 may be formed by protruding from the support plates 120 and 220. For example, the lower surface of the battery cell 110 or 210 may only contact a portion of the protruding surface of the protruding support plates 120 and 220 due to the cooling channels 121 and 221.

The cooling channels 121 and 221 may extend in the length direction of the support plates 120 and 220. The length direction of the support plates 120 and 220 may correspond to the stacking direction of a plurality of battery cells 105 supported by the support plates. The cooling channels 121 and 221 may extend in the width direction of the support plates 120 and 220. The width direction of the support plates 120 and 220 may be perpendicular to the length direction thereof. The cooling channels 121 and 221 may extend in the length direction or the width direction inside the support plates 120 and 220 so as to cool the lower portions of all battery cells 105 supported by the support plates 120 and 220.

The lower surfaces of the cooling channels 121 and 221 may correspond to the lower surfaces of the support plates 120 and 220. For example, in a case where fire extinguishing nozzles 130 having openings passing through the lower surfaces of the cooling channels 121 and 221 are formed on the lower surfaces of the cooling channels 121 and 221, the openings of the fire extinguishing nozzles 130 may also be formed to pass through the lower surfaces of the support plates 115.

The fire extinguishing nozzles 130 may be formed in the first cooling channel 121. For example, the fire extinguishing nozzles 130 may be formed by injection molding on the lower surface of the first cooling channel 121. A plurality of fire extinguishing nozzles 130 may be formed to supply the fire extinguishing agent toward the second battery cell 210.

The fire extinguishing nozzles 130 may be formed along the first cooling channel 121. Although not illustrated in FIG. 1, in a case where additional battery cells 105 are disposed on the lower side of the second support plate 220, the fire extinguishing nozzles 130 may be formed along the second cooling channel 221.

The fire extinguishing nozzles 130 may be connected to the first cooling channel 121 or the second cooling channel 221. The fluid flowing through each cooling channel may be discharged through the fire extinguishing nozzles 130.

The fire extinguishing nozzles 130 may be formed along the cooling channel 125 and may be formed at the position corresponding to the second battery cell 210. Referring to FIG. 2, a plurality of fire extinguishing nozzles 130 may be formed in the region A and enlarged area B, which corresponds to the position of the second battery cell 210 along the first cooling channel 121. In a case where a fire occurs in the second battery cell 210, the fire extinguishing nozzles 130 may directly supply the fire extinguishing agent to the upper portion of the second battery cell 210 where the fire occurred. Therefore, by directly spraying the fire extinguishing agent to the battery cell 105 where the fire occurred, the fire may be prevented from spreading to the surrounding battery cells 105 or surrounding battery modules 135.

The first battery cell 110 and the second battery cell 210 may include at least one electrode assembly wound or stacked with a separator, which is an insulator, interposed between a positive electrode and a negative electrode, a case in which the electrode assembly is built, and a cap plate joined to an opened end of the case. The first battery cell 110 and the second battery cell 210 illustrated in FIG. 1 may be a type of secondary battery. The first battery cell 110 and the second battery cell 210 may be lithium battery cells, sodium battery cells, etc. However, the features described are not limited thereto, and the first battery cell 110 and the second battery cell 210 may include any cells that can repeatedly provide electricity by charging and discharging. The positive electrode and the negative electrode included in the battery cell 105 may include a coated portion, which is an area where an active material is applied to a current collector formed of a thin metal foil, and an uncoated portion, which is an area where no active material is coated. The positive electrode and the negative electrode may be wound with the separator, which is an insulator, interposed therebetween. However, the features described are not limited thereto, and the electrode assembly may have a stacked structure in which the negative electrode and the positive electrode each including a plurality of sheets are alternately stacked with the separator interposed therebetween.

The case may form the overall exterior of the first battery cell 110 and the second battery cell 210 and may be formed of a conductive metal, such as aluminum, an aluminum alloy, or nickel-plated steel. For example, the case may provide a space in which the electrode assembly is accommodated. In FIG. 1, the case is a prismatic case, and the first battery cell 110 and the second battery cell 210 are illustrated as prismatic battery cells, but the features described are not limited thereto. The first battery cell 110 and the second battery cell 210 may be battery cells 105 with any shape, such as a prismatic shape or a cylindrical shape.

As indicated in FIG. 1, a vent portion 211 may be formed on the upper surface of the first battery cell 110 or the second battery cell 210 shown in FIG. 1. The vent portion 211 may be configured to be opened in a case where the internal pressure of the secondary battery exceeds a predefined threshold pressure. At this time, the threshold pressure may be set differently depending on the application field, material, purpose, etc. of the secondary battery. For example, in the case of secondary batteries, which have short charge-discharge cycles during use and thus maintain a high internal pressure in the case on average compared to other application fields, a relatively high threshold pressure can be set. In another example, a relatively high threshold pressure may be set for a secondary battery manufactured from materials and/or designs having relatively high heat and/or pressure resistance. In contrast, a relatively low threshold pressure may be set for a secondary battery manufactured from materials and/or designs having relatively low heat and/or pressure resistance. The vent portion 211 may be configured to be opened in a case where the internal temperature exceeds a predefined threshold temperature. With this structure, the vent portion 211 may prevent an explosion of the secondary battery or prevent a chain exothermic reaction of the secondary battery arranged close to the secondary battery.

The vent portion 211 may include a notch. The notch may be at least one groove removed or dented into the surface of the case to a certain thickness. The notch may have various shapes so as to rupture in a case where the internal pressure of the case exceeds a threshold pressure.

FIG. 1 shows an exemplary illustration in which one vent portion 211 is formed at the center of the upper surface of the secondary battery, but the present disclosure is not limited thereto, and any number of vent portions 211 may be additionally formed at any position. For example, two or more vent portions 211 may be formed on one surface of the case of one or more battery cells 105.

Referring to FIG. 1, the battery structure 100 according to some embodiments may be configured to include at least two battery modules 135. The battery module 135 may include a circuit in which a plurality of battery cells 105 are electrically connected through a plurality of bus bars and in which various circuits and components are mounted and electrically connected to the plurality of bus bars. In some embodiments, the battery module 135 may be referred to as a battery pack. For example, according to an embodiment, the battery module 135 may be included in a vehicle, an energy storage system (ESS), etc.

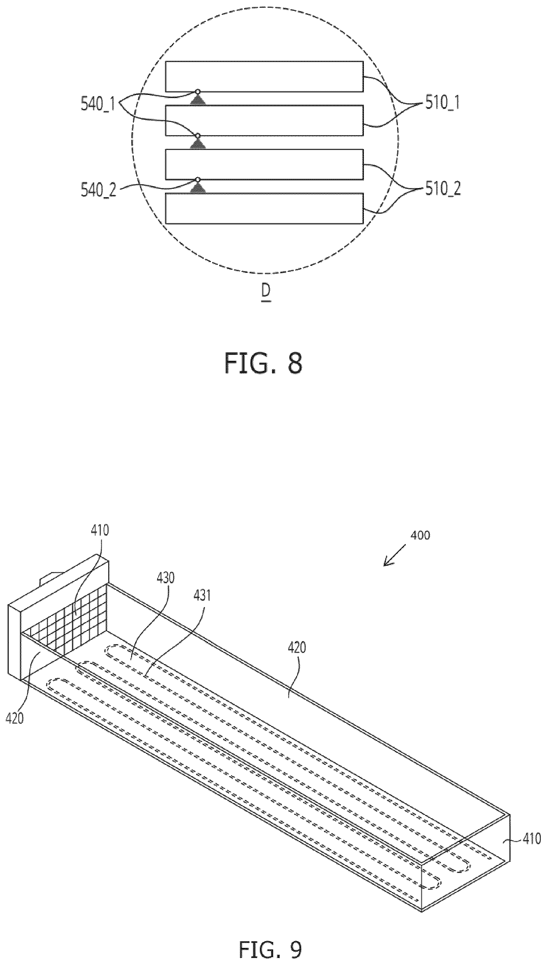

The battery module 135 may include a plurality of battery cells 105. According to some embodiments, the plurality of battery cells 105 in the battery module 135 may be disposed in one direction with wide surfaces thereof facing each other. Although FIG. 1 illustrates that the plurality of battery cells 105 are disposed in a row within the battery module 135, the features described are not limited thereto, and the plurality of battery cells 105 may be arranged in a plurality of rows. According to some embodiments, the battery module 135 may have a plurality of battery cells 105 and a module housing 400, shown in FIG. 1 and detailed with reference to FIG. 9. The battery cells 105 may be accommodated inside the module housing 400 in a stacked form. The battery cell 105 may have a positive lead and a negative lead. The battery cell 105 may be of a circular or prismatic type depending on the shape of the battery. The battery module 135 may include a plurality of battery cells 105 connected in series or parallel with each other. The battery modules 135 may be connected to each other in series or parallel.

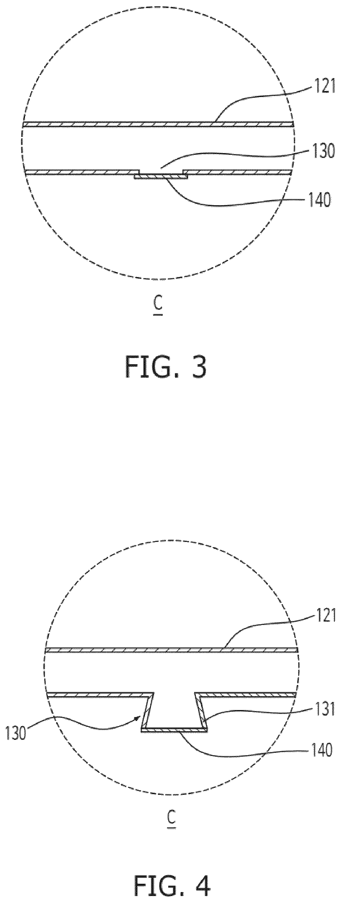

FIG. 3 is a cross-sectional side view of a first cooling channel 121 in a region C, indicated within a partial enlarged view of a region B of FIG. 2, showing fire extinguishing nozzles 130 according to some embodiments.

FIG. 4 is a cross-sectional side view of a first cooling channel 121 in a region C, indicated within a partial enlarged view of a region B of FIG. 2, showing fire extinguishing nozzles 130 according to some embodiments.

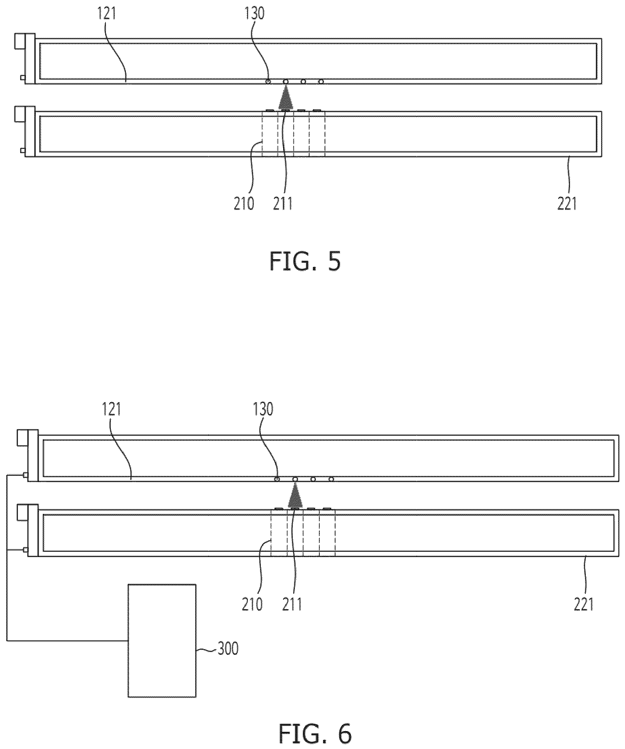

FIG. 5 is a side view of a battery structure 100 according to some embodiments.

Referring to FIGS. 3 to 5, a vent portion 211 may be formed on the upper surface of the second battery cell 210, and the fire extinguishing nozzle 130 may spray the fire extinguishing agent toward the vent portion 211. The vent portion 211 may be formed on the upper surface of the second battery cell 210. The vent portion 211 may be configured to be opened in a case where an internal pressure higher than a predefined threshold pressure is detected in the second battery cell 210. The vent portion 211 may serve as an exhaust passage for vent gas generated inside the second battery cell 210.

A heat-sensitive member 140 may be joined to each fire extinguishing nozzle 130. The heat-sensitive member 140 may be formed on one surface of the fire extinguishing nozzle 130 in the direction in which the fire extinguishing agent is sprayed. The heat-sensitive member 140 may melt above a melting point thereof. For example, the heat-sensitive member 140 may melt in a case where a temperature of 200°C or higher is applied thereto due to a fire in the second battery cell 210. There are no restrictions on the use of fire extinguishing agents, including aqueous agents and Novec.

In some embodiments, the fire extinguishing nozzle 130, as illustrated in FIG. 3, may correspond to a hole passing through the first cooling channel 121. The heat-sensitive member 140 may seal the fire extinguishing nozzle 130. In a case where the heat-sensitive member 140 melts due to a fire in the second battery cell 210, the fire extinguishing nozzle 130 may be opened. In a case where a fire occurs in the second battery cell 210, the heat-sensitive member 140 may melt, the fire extinguishing nozzle 130 may be opened, and the fire extinguishing agent may be sprayed toward the second battery cell 210 through the fire extinguishing nozzle 130. The fire extinguishing agent may be included in the liquid or refrigerant flowing through the cooling channel. In some embodiments, the fire extinguishing nozzle 130 as illustrated in FIG. 4 may include a protrusion 131 connected to the first cooling channel 121. The protrusion 131 may communicate with the cooling channel and may have an opening at one end. The protrusion 131 may protrude toward the second battery cell 210, and the heat-sensitive member 140 may seal the opened end of the protrusion 131. In a case where the heat-sensitive member 140 melts due to a fire in the second battery cell 210, the end of the protrusion 131 may be opened and the fire extinguishing nozzle 130 may be opened. In a case where a fire occurs in the second battery cell 210, the heat-sensitive member 140 may melt, the fire extinguishing nozzle 130 may be opened, and the fire extinguishing agent may be sprayed toward the second battery cell 210 through the fire extinguishing nozzle 130. The protrusion 131 may be positioned adjacent to the vent portion 211 of the second battery cell 210, and the opening of the protrusion 131 may be positioned toward the vent portion 211. The fire extinguishing agent may be included in the liquid or refrigerant flowing through the cooling channel. Accordingly, the fire extinguishing agent may be sprayed accurately to the area where the fire occurred, and the fire extinguishing agent may be sprayed more intensively.

The heat-sensitive member 140 may be formed on one surface of the fire extinguishing nozzle 130 in the direction in which the fire extinguishing agent is sprayed from the fire extinguishing nozzle 130 (e.g., in the direction of gravity). The shape of the fire extinguishing nozzle 130 may be appropriately changed to a polyhedral shape, a spherical shape, a hemispherical shape, etc. Accordingly, the shape of the heat-sensitive member 140 may also be appropriately changed according to the shape of the fire extinguishing nozzle 130. The heat-sensitive member 140 may be formed in the direction in which the fire extinguishing agent is sprayed from the fire extinguishing nozzle 130.

The heat-sensitive member 140 may be melted at a temperature above a predefined threshold value. For example, the threshold temperature or melting point at which the heat-sensitive member 140 melts may be in the range of 80 °C to 250 °C. For example, the threshold temperature may be at least 80 °C and/or up to 90 °C, 100 °C, 110 °C, 120 °C, 130 °C, 140 °C, 150 °C, 160 °C, 170 °C, 180 °C, 190 °C, 200 °C, 210 °C, 220 °C, 230 °C, 240 °C or up to 250°C. Accordingly, in a case where a fire occurs in the second battery cell 210, the heat-sensitive member 140 may melt due to heat or flames discharged through the vent portion 211.

The material of the heat-sensitive member 140 may be determined by considering the temperature rise within the battery module in the event of a fire in the second battery cell 210. The heat-sensitive member 140 may be composed of a resin material such as acrylonitrile butadiene styrene (ABS) or polypropylene (PP), but the present disclosure is not limited thereto. The heat-sensitive member 140 may be formed in a shape that surrounds the fire extinguishing nozzle 130. In this case, the heat-sensitive member 140 normally blocks the fire extinguishing nozzle 130, but in a case where a fire occurs, the heat-sensitive member 140 melts due to heat, allowing the fire extinguishing nozzle 130 to be opened. In a case where the fire extinguishing nozzle 130 is opened, the pressure in the relevant portion may be lowered, so that the fire extinguishing agent supplied through the first cooling channel 121 may be sprayed through the fire extinguishing nozzle 130 according to the pressure gradient. The fire extinguishing agent may be sprayed directly onto the upper portion of the second battery cell 210 where a fire occurred

(e.g., the vent portion 211 of the second battery cell 210) through the fire extinguishing nozzle 130.

In FIG. 3, the heat-sensitive member 140 is illustrated as surrounding the fire extinguishing nozzle 130 in the region wider than the fire extinguishing nozzle 130, but the shape of the heat-sensitive member 140 is not limited thereto. For example, the heat-sensitive member 140 may be formed in a shape corresponding to the diameter of the fire extinguishing nozzle 130. For example, the number of fire extinguishing nozzles 130 formed in the first cooling channel 121 may be two or more, and the size, position, and arrangement of the fire extinguishing nozzles 130 may also be appropriately changed.

The heat-sensitive member 140 may be formed of a material and/or thickness capable of withstanding the spray pressure of the fire extinguishing agent. For example, by adjusting the shape, material, thickness, etc. of the heat-sensitive member 140, the time at which the fire extinguishing nozzle 130 is opened may be adjusted.

As illustrated in FIG. 5, in the battery structure 100 according to some embodiments, the first cooling channel 121 may be configured to perform a cooling function and a fire suppression function.

The first cooling channel 121 may cool the first battery cell 110 while the fire extinguishing agent flows during normal times (in a case where no fire occurs in the second battery cell). In the event of a fire in the second battery cell 210, the first cooling channel 121 may perform the fire suppression function through the fire extinguishing nozzle 130.

FIG. 6 illustrates a side view of a battery structure including a chiller according to an embodiment of the present disclosure.

Referring to FIG. 6, a battery structure 100 according to some embodiments may include a chiller 300. The chiller 300 may be connected to a first cooling channel 121 and a second cooling channel 221 and may supply a refrigerant including a fire extinguishing agent to each cooling channel 125. The chiller 300 may control the spray amount or spray pressure of the fire extinguishing agent.

For example, the chiller 300 may circulate a flow rate of 1.5 LPM per first cooling channel 121 or second cooling channel 221 in a case of performing the cooling function. The chiller 300 may maximize the fire extinguishing effect by increasing the flow rate in a case where a fire occurs in the second battery cell 210. For example, the chiller 300 may continuously maintain the amount and pressure of extinguishing agent sprayed until the fire is extinguished.

Accordingly, before a fire that occurs in a specific battery cell 105 spreads to a plurality of battery cells 105, the fire in the specific battery cell 105 may be quickly extinguished, thereby preventing the fire from spreading to other battery cells 105.

The chiller 300 may be connected to the first cooling channel 121 and the second cooling channel 221 and may supply the refrigerant including the fire extinguishing agent. The first cooling channel 121 and the second cooling channel 221 may be connected to each other. In a situation where a fire does not occur in the second battery cell 210, the lower portion of the first battery cell 110 and the lower portion of the second battery cell 210 may be cooled by the refrigerant.

A plurality of fire extinguishing nozzles 130 may be formed at positions corresponding to the vent portions 211 formed on the upper surface of the second battery cell 210, and the fire extinguishing nozzles 130 may spray the fire extinguishing agent toward the vent portions 211. That is, in a case where a fire occurs in the second battery cell 210 at a specific position, the fire extinguishing nozzle 130 positioned at the upper portion of the battery cell 105 may be opened to extinguish the fire in the second battery cell 210 at the specific position.

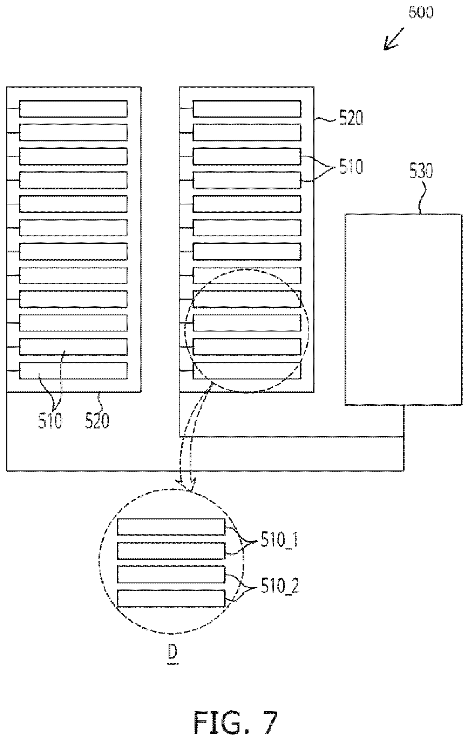

FIG. 7 is an exemplary energy storage device 500 according to some embodiments, and FIG. 8 is a further enlarged view of an enlarged region D in FIG. 7.

According to some embodiments, an energy storage device 500 may include a battery structure 510 and a battery rack 520 in which the battery structure 510 is accommodated. The energy storage device 500 may include a plurality of battery structures 510 and at least one battery rack 520 in which the plurality of battery structures 510 are accommodated. The plurality of battery cells 105 may be accommodated within the housing 400 of each battery module 135 of the battery structure 510. The battery rack 520 may have a frame structure for accommodating the battery structure 510. For example, the battery rack 520 may have a frame structure for stacking the plurality of battery structures 510. The battery rack 520 may include a structure for liquid or refrigerant to flow through cooling channels included in each battery structure 510. For example, the battery rack 520 may include a communication pipe communicating with the cooling channel 125 of each battery structure 510, and the cooling channel 125 may be connected to the chiller 530 through the communication pipe.

The energy storage device 500 may include a battery management system (BMS). The BMS may be connected to a plurality of battery management modules (BMMs) included in each of the plurality of battery modules. For example, the BMS and the plurality of BMMs may be connected in a daisy-chain manner. That is, the BMS may comprehensively monitor and manage all the plurality of battery modules 135 included in the energy storage device 500.

The energy storage device 500 may include the chiller 530. The chiller 530 may be connected to the first cooling channel 121 and the second cooling channel 221 and may supply the refrigerant including the fire extinguishing agent. The chiller 530 may include a refrigerant container and a fire extinguishing agent container. The chiller 530 may mix the refrigerant and the fire extinguishing agent discharged from each container and supply the mixture of the refrigerant and the fire extinguishing agent to each cooling channel 125. The fire extinguishing agent container may be a pressure vessel storing a high-pressure fire extinguishing agent. The fire extinguishing agent may be stored in the fire extinguishing agent container in a compressed or pressurized manner. The chiller 530 may include a mixing container in which the refrigerant and the fire extinguishing agent are stored in a mixed state. The chiller 530 may supply the refrigerant including the fire extinguishing agent to each cooling channel 125.

The chiller 530 may supply the fire extinguishing agent included in the refrigerant to each battery rack 520 through the communication pipe, and the fire extinguishing agent supplied to the battery rack 520 may be supplied to the battery structure 510 accommodated in the battery rack 520. The chiller 530 may control the spray amount or spray pressure of the fire extinguishing agent supplied to the battery structure 510. For example, the chiller 530 may control the spray amount or spray pressure of the fire extinguishing agent by controlling the spray amount or spray pressure of the refrigerant including the fire extinguishing agent.

Battery structures 510_1 and 510_2 may be stacked on the battery rack 520. In a state where the battery structures 510_1 and 510_2 are stacked on the battery rack 520, the fire extinguishing nozzles 540_1 and 540_2 of the battery structures 510_1 and 510_2 may be formed on the lower surface of each cooling channel. The fire extinguishing nozzles 540_1 and 540_2 may be formed at positions corresponding to the second battery cell 210 along the first cooling channel 121. The fire extinguishing nozzles 540_1 and 540_2 may each spray the fire extinguishing agent toward the vent portion formed on the upper surface of the second battery cell 210.

The fire extinguishing nozzles 540_1 and 540_2 of the battery structures 510_1 and 510_2 may be formed on one surface in the direction in which the fire extinguishing agent is sprayed, and the heat-sensitive member that melts at a temperature higher than the melting point may be formed. The heat-sensitive member may seal the fire extinguishing nozzles 540_1 and 540_2, and in a case where the heat-sensitive member melts, the fire extinguishing nozzles 540_1 and 540_2 may be opened. In a case where the fire extinguishing nozzles 540_1 and 540_2 are opened, the fire extinguishing agent may be sprayed toward the second battery cell positioned below through the fire extinguishing nozzles 540_1 and 540_2.

FIG. 9 is a perspective view of an exemplary module housing 400 according to some embodiments.

A module housing 400 according to some embodiments may include a pair of end plates 410, a pair of side plates 420, and a support plate 430. A plurality of battery cells 105 may be accommodated in the module housing 400.

The end plates 410 may be disposed outside the plurality of battery cells 105 aligned in one direction. For example, the end plates 410 may be in contact with the outermost battery cell 105 according to the arrangement direction of the battery cells 105.

The side plates 420 may connect the pair of end plates 410 and may support opposite side surfaces of the plurality of battery cells 105. For example, the side plates 420 may be joined perpendicular to the end plates 410. The support plate 430 may be joined to the pair of end plates 410 in proximity to the bottom surfaces of the plurality of battery cells 105, and a cooling channel 431 through which a fire extinguishing agent flows may be formed. For example, the support plates 430 may support the bottoms of the plurality of battery cells 105. At this time, a fire extinguishing nozzle may be formed on the lower surface of the cooling channel 431.

The module housing 400 may have an approximately hexahedral shape. The module housings 400 may be disposed in the row or column direction (the left-right or up-down direction based on FIG. 7) of the battery rack 520. Although not illustrated, a plurality of battery modules 135 may also be disposed in the depth direction (the front-back direction based on FIG. 7) of the battery rack 520. Inside the module housing 400, a plurality of battery cells 105 may be disposed in a single row or a plurality of columns.

The end plates 410 and the side plates 420 may be joined by welding, screwing, etc., and laser welding may also be used.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure and the claims and their equivalents, below.

## Claims

1. A battery structure (100) comprising:
a first battery cell (110);
a first support plate (120) comprising a first cooling channel (121) for cooling the first battery cell (110) and configured to support the first battery cell (110); and
a second battery cell (210) spaced downward from the first support plate (120);
wherein a fire extinguishing nozzle (130) is formed in the first cooling channel (121), and
the fire extinguishing nozzle (130) is configured to supply a fire extinguishing agent toward the second battery cell (210).

2. The battery structure (100) as claimed in claim 1, wherein the fire extinguishing nozzle (130) is formed at a position corresponding to the second battery cell (210) along the first cooling channel (121).

3. The battery structure (100) as claimed in claim 2, wherein a vent portion (211) is formed on an upper surface of the second battery cell (210), and
the fire extinguishing nozzle (130) is configured to spray the fire extinguishing agent toward the vent portion (211).

4. The battery structure (100) as claimed in any of claims 1 to 3, further comprising a heat-sensitive member (140) formed on one surface of the fire extinguishing nozzle (130) in a spray direction of the fire extinguishing nozzle (130) and melting at a temperature higher than a predefined melting point of the heat-sensitive member (140), wherein
the heat-sensitive member (140) seals the fire extinguishing nozzle (130).

5. The battery structure (100) as claimed in claim 4, wherein the fire extinguishing nozzle (130) comprises a protrusion (131) protruding toward the second battery cell (210), and
the heat-sensitive member (140) seals an opened end of the protrusion (131).

6. The battery structure (100) as claimed in claim 4, wherein, when the heat-sensitive member (140) melts and the fire extinguishing nozzle (130) is opened, wherein the opened fire extinguishing nozzle (130) is configured to spray the fire extinguishing agent toward the second battery cell (210).

7. The battery structure (100) as claimed in any of claims 1 to 6, further comprising a chiller (300) connected to the first cooling channel (121) to supply a refrigerant including a fire extinguishing agent.

8. The battery structure (100) as claimed in claim 7, wherein the chiller (300) is configured to control a spray amount or a spray pressure of the fire extinguishing agent.

9. The battery structure (100) as claimed in claim 7 or 8, wherein the battery structure (100) comprises a second support plate (220) comprising a second cooling channel (221) being configured for cooling the second battery cell (210) and supporting the second battery cell (210),
wherein the first cooling channel (121) and the second cooling channel (221) are connected to each other, and
the first cooling channel (121) is configure to cool a lower portion of the first battery cell (110) by the refrigerant and the second cooling channel (221) is configured to cool a lower portion of the second battery cell (210) by the refrigerant.

10. An energy storage device (500) comprising:
a battery structure (100, 510, 510_1, 510_2); and
a battery rack (520) in which the battery structure (510, 510_1, 510_2) is accommodated,
wherein the battery structure (100, 510, 510_1, 510_2) is the battery structure (100, 510, 510_1, 510_2) of any of the preceding claims.

11. The energy storage device (500) as claimed in claim 10 when the battery structure (100, 510, 510_1, 510_2) is the battery structure (100, 510, 510_1, 510_2) of any of claims 2 to 9, wherein the fire extinguishing nozzle (130, 540_1, 540_2) of the battery structure (100, 510, 510_1, 510_2) is formed at the position corresponding to the second battery cell (210) along the first cooling channel (121) in a state of being stacked on the battery rack (520).
